# FASCICULE DE BREVET EUROPEEN

(11) **EP 4 078 803 B1**
(45) Date de publication et mention de la délivrance du brevet: **10.07.2024**
(21) Numéro de dépôt: 20800683.3
(22) Date de dépôt: 09.11.2020
(51) Int. Cl.: H02P 6/08, H02P 6/16, H02P 6/17, H02P 25/022, H02P 25/026, B60L 3/00, B60L 3/12

(54) **DISPOSITIF DE DÉTERMINATION DE LA POSITION ANGULAIRE D'UN ROTOR DE MACHINE ÉLECTRIQUE TOURNANTE**
VORRICHTUNG ZUR BESTIMMUNG DER WINKELLAGE EINES ROTORS EINER ROTIERENDEN ELEKTRISCHEN MASCHINE
DEVICE FOR DETERMINING THE ANGULAR POSITION OF A ROTOR OF A ROTATING ELECTRIC MACHINE

(30) Priorité: 20.12.2019 FR 1915288
(43) Date de publication de la demande: 26.10.2022
(73) Titulaire: VALEO EQUIPEMENTS ELECTRIQUES MOTEUR, 94046 Créteil Cedex (FR)
(72) Inventeur: LABISTE, Laurent, 94046 CRETEIL CEDEX (FR)
(74) Mandataire: Valeo Powertrain Systems
(86) Numéro de dépôt international: PCT/EP2020/081447
(87) Numéro de publication internationale: WO 2021/121770

(56) Documents cités:
- EP-A2- 2 124 327
- US-A1- 2014 116 156
- US-B1- 6 243 167

## Description

La présente invention concerne un dispositif de détermination de la position angulaire d'un rotor de machine électrique tournante ainsi qu'un ensemble comprenant un tel dispositif de détermination et une telle machine électrique tournante.

La machine électrique est par exemple un alternateur ou un alterno-démarreur alimenté par une tension nominale de 12V ou de 48V, voire plus.

Cette machine électrique peut être intégrée à un véhicule à propulsion hybride ou purement électrique, par exemple une automobile.

La commande de cette machine électrique nécessite la connaissance de la position angulaire du rotor de la machine. Pour ce faire, il est connu dans le cas d'une machine synchrone triphasée d'utiliser plusieurs capteurs à effet Hall dont les signaux sont traités, après transformation mathématique telle qu'une transformée de Clarke ou de Concordia, par un circuit réalisant une boucle de contrôle pour estimer la position du rotor. Ce circuit fournit en sortie un signal représentatif de cette position du rotor. Cette mesure peut ensuite être par exemple utilisée pour commander l'onduleur/redresseur interposé entre le stator de cette machine électrique et l'unité de stockage d'énergie électrique du réseau de bord du véhicule, qui est notamment une batterie.

La précision de la position obtenue en sortie du circuit réalisant la boucle de contrôle dépend en grande partie de la précision des signaux qui sont fournis par les capteurs. D'un capteur à l'autre, le signal peut présenter une amplitude de première harmonique différente et cet écart d'amplitude, d'un capteur à l'autre, entraîne l'apparition d'harmoniques au niveau du circuit précité réalisant la boucle de contrôle.

Pour remédier au problème d'écart d'amplitude entre capteurs, il est connu d'affecter aux coefficients de la matrice utilisée pour appliquer la transformation mathématique précitée une valeur corrigeant les paramètres précités. De tels coefficients étant fixés une fois pour toutes à partir du comportement pour un point de fonctionnement de la machine électrique, la correction n'est pas robuste et elle n'est pas adaptée à toute la plage de fonctionnement de la machine électrique. Cette correction n'est par exemple plus optimale lorsque la température de la machine change. Un exemple de réalisation de la détermination de la position angulaire d'un rotor est divulgué dans le document EP2124327B1.

Il existe un besoin pour remédier aux inconvénients précités, en améliorant de façon robuste la qualité des signaux reçus par le circuit réalisant une boucle de contrôle pour estimer la position du rotor.

L'invention est définie aux revendications indépendantes 1 et 9.

L'invention vise à répondre à ce besoin et elle y parvient, selon l'un de ses aspects, à l'aide d'un dispositif de détermination de la position angulaire d'un rotor de machine électrique tournante sur la base de signaux fournis par plusieurs capteurs de position, dispositif comprenant :
- un circuit réalisant une boucle de contrôle pour estimer la position du rotor, fournissant en sortie un signal représentatif de la position du rotor, et
- un circuit de normalisation dynamique par l'amplitude de la première harmonique de chaque signal issu d'un capteur de position, ce circuit de normalisation dynamique étant disposé en amont du circuit réalisant une boucle de contrôle pour estimer la position du rotor,
ce circuit de normalisation dynamique recevant en entrée :
- chaque signal issu d'un capteur de position, et
- au moins une image du signal représentatif de la position du rotor, cette image étant notamment une combinaison linéaire du cosinus et du sinus d'un angle mesuré par rapport à la position de référence du rotor,
ce circuit de normalisation dynamique étant configuré pour :
- démoduler chaque signal issu d'un capteur de position par l'image du signal représentatif de la position du rotor,
- déterminer à l'issue de cette démodulation l'amplitude de la première harmonique de ce signal issu d'un capteur de position, et
- normaliser chaque signal issu d'un capteur de position en le divisant par l'amplitude de la première harmonique dudit signal préalablement déterminée.

Selon l'invention, chaque signal issu d'un capteur de position est ainsi normalisé de façon dynamique, de sorte que le circuit réalisant la boucle de contrôle pour estimer la position du rotor traite des signaux issus des capteurs de position dont l'amplitude par rapport à la première harmonique reste constante au cours du temps. En conséquence, on réduit, voire on élimine, les harmoniques générées dans le circuit réalisant la boucle de contrôle, ce qui améliore la précision du signal représentatif de la position du rotor. On améliore alors en conséquence toute autre commande utilisant ce signal représentatif de la position du rotor.

La démodulation d'un signal issu d'un capteur de position peut être effectuée de manière synchrone.

Le signal représentatif de la position du rotor est par exemple une valeur d'angle par rapport à une position de référence. L'image du signal représentatif de la position du rotor est par exemple une combinaison linéaire du cosinus et du sinus de cet angle mesuré par rapport à la position de référence.

Lors de la démodulation, on peut appliquer une même image du signal représentatif de la position du rotor à chaque signal issu d'un capteur. Dans le cas où l'on utilise plus de deux capteurs pour déterminer la position du rotor, par exemple trois capteurs, par exemple trois capteurs à effet Hall, l'image du signal représentatif peut être proportionnelle au cosinus de l'angle précité, ou au sinus de cet angle, ou être une combinaison linéaire du cosinus de cet angle et du sinus de cet angle.

Le circuit de normalisation dynamique peut comprendre un filtre passe-bas permettant d'isoler du résultat de la démodulation effectuée l'amplitude de la première harmonique du signal issu d'un capteur de position. Il n'est ainsi pas nécessaire de prévoir un filtre passe-bande à fréquence de coupure variable appliqué en amont de la démodulation.

Le filtre passe-bas peut être du 2ème ordre.

Le filtre passe-bas peut présenter une fréquence de coupure comprise entre 0.3 Hz et 50 Hz pour une cible magnétique portée par le rotor à huit paires de pôles. Cette fréquence de coupure peut être fixe et permettre d'extraire l'amplitude de la première harmonique du signal auquel la démodulation a été appliquée pour toute la plage de fonctionnement de la machine électrique. La normalisation de chaque signal issu d'un capteur de position par le circuit de normalisation dynamique peut alors s'effectuer en permanence en divisant ledit signal par l'amplitude de la première harmonique déterminée à l'aide de la démodulation précitée.

En variante, cette normalisation ne s'effectue en divisant ledit signal par l'amplitude de la première harmonique déterminée à l'aide de la démodulation précitée que pour une certaine plage de fonctionnement de la machine électrique, par exemple au-delà d'une vitesse de rotation au rotor minimum. En deçà de cette vitesse de rotation minimum, qui est par exemple de 100, 200, 300, 400, 500, 600 ou 700 tr/min, la normalisation peut s'effectuer en divisant le signal par une valeur d'amplitude de première harmonique prédéfinie, qui est par exemple la dernière valeur d'amplitude déterminée pour cette première harmonique ou une autre valeur telle qu'une valeur calculée pour un point de fonctionnement donné de la machine électrique tournante. Cette valeur d'amplitude de première harmonique prédéfinie n'est pas nécessairement constante. Une telle normalisation à partir d'un seuil de vitesses permet d'éviter d'avoir à utiliser un filtre passe-bas trop sélectif.

Le filtre passe-bas peut être configuré pour avoir une fréquence de coupure variable en fonction de la vitesse du rotor. Une telle configuration est adaptée lorsque l'on souhaite améliorer la précision de l'amplitude de la première harmonique que l'on cherche à déterminer. Le filtre passe-bas peut alors présenter :
- une première plage de fonctionnement avec une fréquence de coupure supérieure à un premier seuil de fréquence, par exemple de l'ordre de 2 Hz pour une cible magnétique portée par le rotor à huit paires de pôles lorsque la vitesse du rotor est inférieure à un premier seuil de vitesse, par exemple de l'ordre de 2000 tr/min, et
- une deuxième plage de fonctionnement avec une fréquence de coupure inférieure à un deuxième seuil de fréquence inférieur au premier seuil de fréquence, ce deuxième seuil de fréquence étant par exemple de l'ordre de 0.5 Hz, lorsque la vitesse du rotor est supérieure au premier seuil de vitesse et toujours avec la cible magnétique précitée.

Dans une autre variante de ce qui vient d'être décrit, le filtre passe-bas peut rester dans la deuxième plage de fonctionnement même lorsque l'on redescend sous le premier seuil de vitesses postérieurement à une première plage de fonctionnement.

L'existence de la première plage de fonctionnement pour le filtre passe-bas permet d'extraire rapidement une valeur d'amplitude pour la première harmonique du signal issu du capteur. Au début de cette première plage de fonctionnement, la valeur d'amplitude de première harmonique prédéfinie peut être utilisée en entrée du filtre passe-bas.

Comme on l'a vu, dans tout ce qui précède, le dispositif de détermination peut comprendre des moyens pour désactiver le circuit de normalisation dynamique en fonction d'une condition prédéfinie, par exemple fonction de la vitesse de rotation du rotor de la machine électrique.

Le circuit de normalisation dynamique peut, pour chaque signal issu d'un capteur, appliquer une démodulation propre à ce signal et traiter la sortie de cette démodulation par un filtre passe-bas spécifique. Chacun de ces filtres passe-bas peut être identique. Par ailleurs, d'un capteur de position à l'autre, la valeur d'amplitude de première harmonique prédéfinie peut être différente.

Dans tout ce qui précède, le dispositif peut être configuré pour appliquer à chaque signal normalisé en sortie du circuit de normalisation dynamique une transformation mathématique de modélisation d'un système, notamment d'un système triphasé, en un système diphasé. Cette transformation utilise par exemple une matrice de Clarke ou de Concordia.

Le circuit de normalisation dynamique est disposé en amont du circuit réalisant une boucle de contrôle pour estimer la position du rotor.

La transformation mathématique de modélisation du système peut être appliquée par un bloc disposé en sortie du circuit de normalisation dynamique et en entrée du circuit réalisant la boucle de contrôle pour estimer la position du rotor.

L'invention a encore pour objet, selon un autre de ses aspects, un ensemble comprenant :
- une machine électrique tournante pour la propulsion d'un véhicule hybride ou électrique, et
- un dispositif de commande de cette machine électrique, comprenant un dispositif de détermination tel que défini ci-dessus.

La machine électrique tournante est par exemple une machine synchrone, par exemple une machine synchrone triphasée ou une machine synchrone dont l'enroulement électrique de stator définit un double système triphasé. L'enroulement électrique de stator est par exemple formé par des fils ou par des barres conductrices reliées les unes les autres.

Dans tout ce qui précède, le rotor peut être un rotor à griffes. Ce rotor comprend alors une première et une deuxième roues polaires imbriquées, la première roue polaire définissant une série de griffes de forme globalement trapézoïdale, chaque griffe s'étendant axialement en direction de la deuxième roue polaire, la deuxième roue polaire définissant une série de griffes de forme globalement trapézoïdale, chaque griffe s'étendant axialement en direction de la première roue polaire. Un aimant permanent peut être reçu entre deux griffes consécutives circonférentiellement parlant pour le rotor. En variante, le rotor peut être autre qu'un rotor à griffes, comprenant par exemple un paquet de tôles ou étant un rotor à cage.

Dans tout ce qui précède, le rotor peut comprendre un nombre de paires de pôles quelconque, par exemple six ou huit paires de pôles.

La machine électrique tournante peut présenter une puissance électrique nominale de 4 kW, 8 kW, 15 kW, 25 kW ou plus.

Cette machine électrique tournante peut être alimentée électriquement depuis une unité de stockage d'énergie électrique via un onduleur/redresseur de l'ensemble, cet onduleur/redresseur permettant, selon que la machine électrique fonctionne en moteur ou en génératrice, de charger un réseau de bord du véhicule ou d'être électriquement alimenté depuis ce réseau.

La tension nominale de l'unité de stockage d'énergie électrique peut être de 12 V, 48 V ou avoir une autre valeur, par exemple une autre valeur supérieure à 300 V.

La machine électrique tournante peut encore comprendre une poulie ou tout autre moyen de liaison vers le reste du groupe motopropulseur du véhicule. La machine électrique est par exemple reliée, notamment via une courroie, au vilebrequin du moteur thermique du véhicule. En variante, la machine électrique est reliée à d'autres emplacement du groupe motopropulseur, par exemple à l'entrée de la boîte de vitesses du point de vue du couple transitant vers les roues du véhicule, en sortie de la boîte de vitesses du point de vue du couple transitant vers les roues du véhicule, au niveau de la boîte de vitesses du point de vue du couple transitant vers les roues du véhicule, ou encore sur le train avant ou le train arrière de ce groupe motopropulseur.

La machine électrique tournante n'est pas nécessairement une machine synchrone, pouvant être une machine asynchrone.

L'invention a encore pour objet, selon un autre de ses aspects, un procédé de détermination de la position angulaire d'un rotor de machine électrique tournante sur la base de signaux fournis par plusieurs capteurs de position, dans lequel on utilise un dispositif de détermination tel que défini précédemment.

Tout ou partie de ce qui a été mentionné précédemment s'applique encore à cet autre aspect de l'invention.

Ce procédé de détermination est par exemple intégré à un procédé de contrôle de la machine électrique, dans lequel la position angulaire du rotor déterminée comme ci-dessus est utilisée pour contrôler le couple moteur et/ou le courant de l'unité de stockage d'énergie électrique.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique et en coupe axiale un exemple de machine électrique tournante auquel peut s'appliquer l'invention,
- la figure 2 représente de façon schématique le dispositif de détermination de la position du rotor de la machine selon un exemple non limitatif de mise en oeuvre de l'invention,
- la figure 3 représente de façon schématique le circuit de normalisation dynamique de la figure 2,
- la figure 4 représente de façon schématique le circuit réalisant la boucle de contrôle pour estimer la position du rotor de la figure 2,
   et
- la figure 5 représente plusieurs variations de l'amplitude du signal issu d'un capteur de position en fonction d'une même consigne de vitesse appliquée au rotor de la machine électrique.

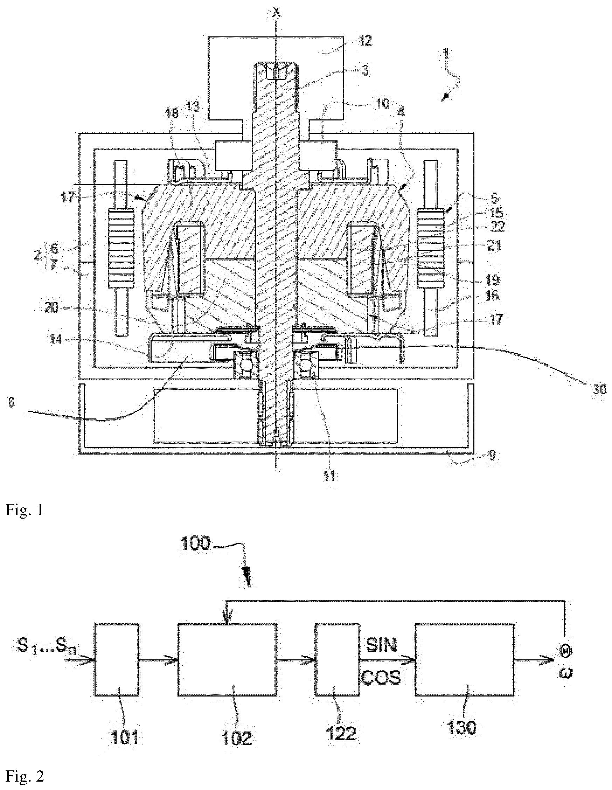

On a représenté sur la figure 1 une machine électrique tournante 1 polyphasée, notamment pour véhicule automobile, à laquelle peut s'appliquer l'invention.

Cette machine électrique tournante peut former un alternateur ou un alterno-démarreur du véhicule. Cette machine électrique tournante peut être alimentée via un composant électronique de puissance 9 comprenant un onduleur/redresseur par une batterie dont la tension nominale est de 12 V ou 48 V ou d'une valeur supérieure à 300 V, par exemple.

La machine électrique tournante 1 comporte un carter 2. A l'intérieur de ce carter 2, elle comporte, en outre, un arbre 3, un rotor 4 solidaire en rotation de l'arbre 3 et un stator 5 entourant le rotor 4. Le mouvement de rotation du rotor 4 se fait autour d'un axe X. Dans cet exemple, le carter 2 comporte un palier avant 6 et un palier arrière 7 qui sont assemblés ensemble. Ces paliers 6, 7 sont de forme creuse et portent, chacun, centralement un roulement à billes 10, 11 respectif pour le montage à rotation de l'arbre 3.

Une poulie 12 est dans l'exemple considéré fixée sur une extrémité avant de l'arbre 3, au niveau du palier avant 6, par exemple à l'aide d'un écrou en appui sur le fond de la cavité de cette poulie. Cette poulie 12 permet de transmettre le mouvement de rotation à l'arbre 3 et elle peut être reliée via une courroie au vilebrequin du moteur thermique du véhicule.

L'extrémité arrière de l'arbre 3 porte, ici, des bagues collectrices appartenant à un collecteur et reliées par des liaisons filaires au bobinage. Des balais appartenant à un porte-balais 8 sont disposés de façon à frotter sur les bagues collectrices.

Le palier avant 6 et le palier arrière 7 peuvent comporter, en outre, des ouvertures sensiblement latérales pour le passage de l'air en vue de permettre le refroidissement de la machine électrique tournante par circulation d'air engendrée par la rotation d'un ventilateur avant 13 sur la face dorsale avant du rotor 4, c'est-à-dire au niveau du palier avant 6 et d'un ventilateur arrière 14 sur la face dorsale arrière du rotor, c'est-à-dire au niveau du palier arrière 7.

Dans cet exemple de réalisation, le stator 5 comporte un corps 15 en forme d'un paquet de tôles doté d'encoches, par exemple du type semi fermée ou ouverte, équipées d'isolant d'encoches pour le montage de l'enroulement électrique polyphasé du stator. Chaque phase comporte un enroulement 16 traversant les encoches du corps 15 et formant, avec toutes les phases, un chignon avant et un chignon arrière de part et d'autre du corps du stator. Les enroulements 16 sont par exemple obtenus à partir d'un fil continu recouvert d'émail ou à partir d'éléments conducteurs en forme de barre tels que des épingles reliées entre elles. L'enroulement électrique du stator est par exemple triphasé, mettant alors en oeuvre un montage en étoile ou en triangle dont les sorties sont reliées au composant électronique de puissance 9.

Le rotor 4 de la figure 1 est un rotor à griffe. Il comporte deux roues polaires 17. La première roue polaire 17 est tournée vers le composant électronique de puissance 9 tandis que la deuxième roue polaire 17 est tournée vers la poulie 12.

Chacune des roues polaires 17 comprend un fond 18 s'étendant radialement de part et d'autre de l'axe X, la roue définissant une série de griffes 19 de forme globalement trapézoïdale. Chaque griffe d'une roue polaire 17 s'étend axialement en direction de l'autre roue polaire depuis une base disposée sur la périphérie radialement extérieure du fond 18.

Le rotor 4 comporte encore, entre les portions radialement intérieures 20 et les griffes 19, une bobine bobinée sur un isolant de bobine 22.

Le rotor 4 peut également comporter des aimants permanents (non représentés) interposés entre deux griffes 19 voisines à la périphérie externe du rotor. En variante, le rotor 4 peut être dépourvu de tels aimants permanents.

Le nombre de paires de pôles défini par le rotor 4 peut être quelconque, par exemple être égal à six ou à huit.

La machine comprend encore des capteurs de mesure de la position du rotor 4, par exemple trois capteurs à effet Hall, regroupés dans un même boîtier en plastique. Ces capteurs sont par exemple positionnés au niveau du palier arrière 7 de la machine et ils interagissent avec une cible magnétique 30 solidaire en rotation du rotor. Dans l'exemple qui va être décrit, cette cible magnétique 30 définit huit paires de pôles.

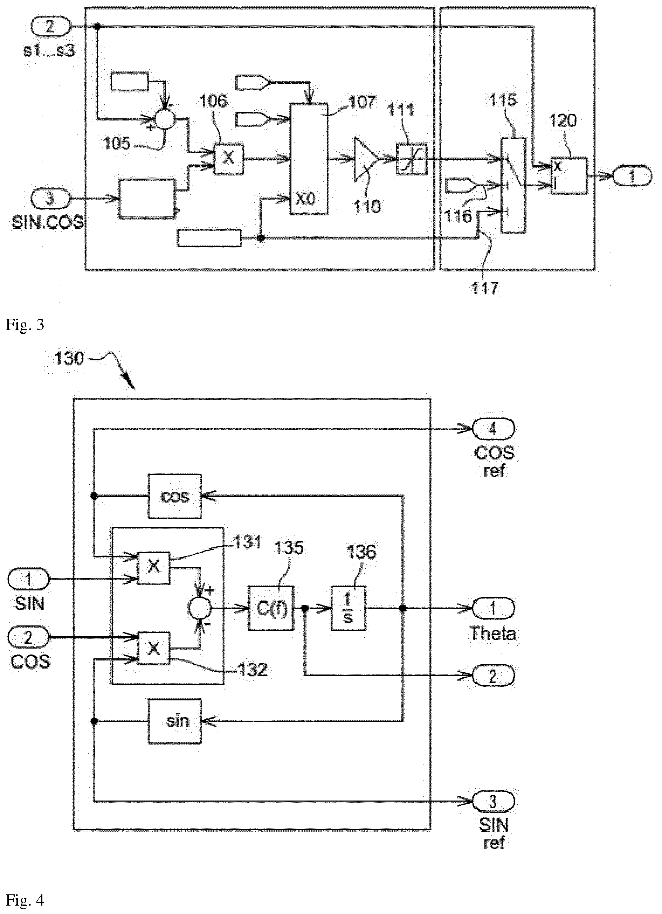

Les mesures fournies par ces capteurs sont utilisées par le circuit 100 de détermination de la position angulaire du rotor 4, qui va maintenant être décrit en référence aux figures 2 à 4.

De façon connue, le circuit 100 comprend un bloc 101 réalisant une discrétisation des signaux s1 à s3 acquis par chaque capteur de position.

En sortie de ce bloc 101, les différents signaux issus des capteurs et qui ont été discrétisés attaquent un circuit de normalisation dynamique 102 qui reçoit également en entrée une image du signal représentatif de la position du rotor. Cette image est ici une combinaison linéaire du cosinus et du sinus de l'angle θ mesuré par rapport à une position de référence de ce rotor, la dérivée temporelle de cet angle correspondant à la vitesse de rotation de ce rotor 4.

Dans l'exemple considéré, chaque signal issu d'un capteur puis discrétisé qui est reçu en entrée du circuit de normalisation dynamique 102 est d'abord corrigé en 105 par soustraction de l'erreur de zéro. Le signal ainsi corrigé subit ensuite en 106 une démodulation synchrone et cohérente par la combinaison linéaire du cosinus et du sinus de l'angle du rotor.

Le signal xᵢ résultant de cette démodulation attaque ensuite un filtre passe-bas 107 qui présente dans l'exemple considéré une fréquence de coupure variable. Selon une première plage de fonctionnement, par exemple pour une vitesse du rotor comprise entre 0 tr/mn et 2000 tr/mn, la fréquence de coupure de ce filtre 107 est comprise entre 2 Hz et 50 Hz dans l'exemple considéré. Selon une deuxième plage de fonctionnement, par exemple pour une vitesse du rotor supérieure à 2000 tr/mn, la fréquence de coupure du filtre est de l'ordre de 0.5 Hz dans l'exemple considéré.

Le filtre passe-bas 107 présente une autre entrée correspondant à une valeur d'amplitude prédéfinie x0ᵢ pour la première harmonique du signal reçu en entrée du circuit de normalisation dynamique 102. Cette valeur x0ᵢ peut être utilisée comme donnée d'entrée par le filtre passe-bas 107 en début de première plage de fonctionnement.

En sortie du filtre passe-bas 107, on peut extraire du signal démodulé la valeur de la première harmonique du signal reçu en entrée du circuit de normalisation dynamique 102 pour chacun des modes de fonctionnement précités.

Une compensation de déphasage et une saturation sont respectivement appliqués à cette amplitude de la première harmonique du signal reçu en entrée du circuit de normalisation dynamique 102 par des blocs respectifs 110 et 111, et le signal résultant est reçu en entrée d'un sélecteur 115. Ce sélecteur reçoit également un signal de commande via une entrée 116, ainsi que via une autre entrée 117 la valeur prédéfinie de l'amplitude de la première harmonique également reçue en entrée du filtre 107.

Selon le cas, on peut via le signal de commande sur l'entrée 116, imposer en sortie du sélecteur 115 :
- la valeur de première amplitude pour le signal reçu en entrée du circuit 102 résultant de l'opération de démodulation, ou
- la valeur de première amplitude prédéfinie x0ᵢ pour cette première harmonique dudit signal.

Cette valeur en sortie du sélecteur 115 est alors utilisée pour normaliser le signal reçu en entrée du circuit 102, un bloc 120 divisant ce signal reçu en entrée du circuit 102 par la valeur de l'amplitude de la première harmonique pour ce signal présent en sortie du sélecteur 115.

Ce qui vient d'être décrit ci-dessus est appliqué en parallèle à chaque signal issu d'un capteur de position du rotor de la machine électrique.

Les signaux ainsi obtenus en sortie du circuit 102 sont reçus en entrée d'un bloc 122 réalisant une transformation mathématique de modélisation du système, qui est dans l'exemple triphasé, en un système diphasé. Cette transformation utilise par exemple une matrice de Clarke ou de Concordia. D'autres transformations peuvent être utilisées lorsque le nombre de capteurs de position est différent de 3.

Les signaux en sortie de ce bloc 122 sont reçus en entrée d'un circuit 130 réalisant une boucle de contrôle de la position du rotor 4, fournissant en sortie un signal représentatif de la position du rotor 4 étant l'angle θ précité. Ce circuit 130 module via un bloc 131 le signal en sinus en sortie du bloc 122 par le cosinus de l'angle θ, et ce circuit 130 module également via un bloc 132 le signal en cosinus en sortie du bloc 122 par le sinus de l'angle θ. La différence entre les signaux en sortie des blocs 131 et 132 est reçue en entrée d'un correcteur 135. La sortie du correcteur 135 fournit la vitesse de rotation du rotor 4 qui fournit une autre sortie du circuit 130, et cette vitesse de rotation attaque un intégrateur 136 du circuit 130, afin d'obtenir l'angle θ.

Les valeurs de vitesse et d'angle ainsi obtenues peuvent être utilisées pour la commande de la machine électrique tournante 1.

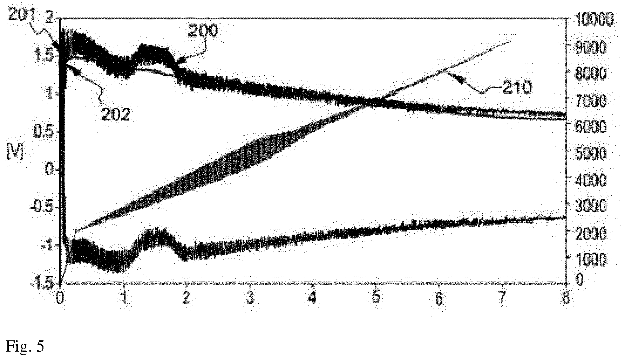

La figure 5 représente sur un même graphe plusieurs réponses provenant d'un capteur de position lors d'une rampe de vitesses 210 pour le rotor 4 passant de 0 à 10 000 tr/min.

La courbe 200 représente le signal fourni par le capteur selon l'art antérieur en réaction à cette rampe de vitesse, en amont du dispositif de détermination 100.

La courbe 201 représente la valeur réelle de cette amplitude de la première harmonique en réaction à cette rampe de vitesse.

La courbe 202 représente l'amplitude de la première harmonique de ce signal, telle que déterminée à l'aide du circuit 102 décrit ci-dessus en réaction à cette rampe de vitesse.

On constate que, alors que la courbe 200 n'est ni rapide, ni stable, ni précise, la courbe 202 suit la courbe 201 dès les basses vitesses en dépit des perturbations telles que l'offset et les autres harmoniques.

L'invention n'est pas limitée à l'exemple qui vient d'être décrit, elle est définie par la revendication indépendante.

## Revendications

1. Dispositif de détermination (100) de la position angulaire d'un rotor (4) de machine électrique tournante sur la base de signaux fournis par plusieurs capteurs de position, dispositif comprenant :
- un circuit (130) réalisant une boucle de contrôle pour estimer la position du rotor, fournissant en sortie un signal représentatif de la position du rotor,
**caractérisé par le fait qu'**il comprend un circuit (102) de normalisation dynamique par l'amplitude de la première harmonique de chaque signal issu d'un capteur de position, ce circuit (102) de normalisation dynamique étant disposé en amont du circuit (130) réalisant une boucle de contrôle pour estimer la position du rotor,
ce circuit (102) de normalisation dynamique recevant en entrée :
- chaque signal issu d'un capteur de position, et
- au moins une image du signal représentatif de la position du rotor, cette image étant notamment une combinaison linéaire du cosinus et du sinus d'un angle mesuré par rapport à la position de référence du rotor,
ce circuit (102) de normalisation dynamique étant configuré pour :
- démoduler chaque signal issu d'un capteur de position par l'image du signal représentatif de la position du rotor,
- déterminer à l'issue de cette démodulation l'amplitude de la première harmonique de ce signal issu d'un capteur de position, et
- normaliser chaque signal issu d'un capteur de position en le divisant par l'amplitude de la première harmonique dudit signal préalablement déterminée.

2. Dispositif selon la revendication 1, dans lequel la démodulation d'un signal issu d'un capteur de position est effectuée de manière synchrone.

3. Dispositif selon l'une des revendications précédentes, dans lequel le circuit (102) de normalisation dynamique n'effectue la normalisation par division du signal issu du capteur de position par l'amplitude de la première harmonique déterminée à l'aide de la démodulation que pour une certaine plage de fonctionnement de la machine électrique.

4. Dispositif selon la revendication précédente, dans lequel le circuit (102) de normalisation dynamique effectue la normalisation dynamique hors de cette plage de fonctionnement de la machine en divisant le signal issu du capteur de position par une valeur d'amplitude de première harmonique prédéfinie.

5. Dispositif selon l'une quelconque des revendications précédentes, dans lequel le circuit (102) de normalisation dynamique comprend un filtre passe-bas (107) permettant d'isoler du résultat de la démodulation effectuée l'amplitude de la première harmonique du signal issu d'un capteur de position.

6. Dispositif selon la revendication 5, dans lequel le filtre passe-bas (107) est configuré pour avoir une fréquence de coupure variable en fonction de la vitesse du rotor.

7. Dispositif selon l'une quelconque des revendications précédentes, étant configuré pour appliquer à chaque signal normalisé en sortie du circuit (102) de normalisation dynamique une transformation mathématique de modélisation d'un système, notamment d'un système triphasé, en un système diphasé, la transformation mathématique de modélisation du système étant notamment appliquée par un bloc disposé en sortie du circuit (102) de normalisation dynamique et en entrée du circuit (130) réalisant la boucle de contrôle pour estimer la position du rotor.

8. Ensemble comprenant :
- une machine électrique tournante pour la propulsion d'un véhicule hybride ou électrique, et
- un dispositif de commande de cette machine électrique, comprenant un dispositif de détermination (100) selon l'une quelconque des revendications précédentes.

9. Procédé de détermination de la position angulaire d'un rotor (4) de machine électrique tournante sur la base de signaux fournis par plusieurs capteurs de position, dans lequel on utilise un dispositif de détermination selon l'une quelconque des revendications précédentes.

## Patentansprüche

1. Vorrichtung zur Bestimmung (100) der Winkelposition eines Rotors (4) einer drehenden elektrischen Maschine auf Basis von Signalen, die von mehreren Positionssensoren bereitgestellt werden, wobei die Vorrichtung Folgendes umfasst:
- einen Schaltkreis (130), der einen Steuerkreis zur Schätzung der Position des Rotors herstellt, der am Ausgang ein Signal bereitstellt, das für die Position des Rotors repräsentativ ist,
**dadurch gekennzeichnet, dass** sie einen Schaltkreis (102) zur dynamischen Normalisierung durch die Amplitude der ersten Harmonischen jedes von einem Positionssensor kommenden Signals umfasst, wobei dieser Schaltkreis (102) zur dynamischen Normalisierung stromauf des Schaltkreises (130) angeordnet ist, der einen Steuerkreis zur Schätzung der Position des Rotors herstellt,
wobei dieser Schaltkreis (102) zur dynamischen Normalisierung am Eingang Folgendes empfängt:
- jedes von einem Positionssensor kommende Signal, und
- wenigstens ein Bild des Signals, das für die Position des Rotors repräsentativ ist, wobei dieses Bild insbesondere eine lineare Kombination des Kosinus und des Sinus eines Winkels ist, der im Verhältnis zur Referenzposition des Rotors gemessen wird,
wobei dieser Schaltkreis (102) zur dynamischen Normalisierung dazu ausgebildet ist:
- jedes von einem Positionssensor kommende Signal durch das Bild des Signals zu demodulieren, das für die Position des Rotors repräsentativ ist,
- am Ende dieser Demodulation die Amplitude der ersten Harmonischen dieses von einem Positionssensor kommenden Signals zu bestimmen, und
- jedes von einem Positionssensor kommende Signal zu normalisieren, indem es durch die zuvor bestimmte Amplitude der ersten Harmonischen des Signals geteilt wird.

2. Vorrichtung nach Anspruch 1, wobei die Demodulation eines von einem Positionssensor kommenden Signals synchron erfolgt.

3. Vorrichtung nach einem der vorhergehenden Ansprüche, wobei der Schaltkreis (102) zur dynamischen Normalisierung die Normalisierung durch Teilung des von dem Positionssensor kommenden Signals durch die Amplitude der ersten Harmonischen, die mithilfe der Demodulation bestimmt wird, nur für einen bestimmten Betriebsbereich der elektrischen Maschine durchführt.

4. Vorrichtung nach dem vorhergehenden Anspruch, wobei der Schaltkreis (102) zur dynamischen Normalisierung die dynamische Normalisierung außerhalb dieses Betriebsbereichs der Maschine durchführt, indem das von dem Positionssensor kommende Signal durch einen vordefinierten Amplitudenwert der ersten Harmonischen geteilt wird.

5. Vorrichtung nach einem der vorhergehenden Ansprüche, wobei der Schaltkreis (102) zur dynamischen Normalisierung einen Tiefpassfilter (107) umfasst, der es ermöglicht, die Amplitude der ersten Harmonischen des von einem Positionssensor kommenden Signals vom Ergebnis der durchgeführten Demodulation zu isolieren.

6. Vorrichtung nach Anspruch 5, wobei der Tiefpassfilter (107) dazu ausgebildet ist, eine Grenzfrequenz aufzuweisen, die je nach der Drehzahl des Rotors variabel ist.

7. Vorrichtung nach einem der vorhergehenden Ansprüche, die dazu ausgebildet ist, auf jedes normalisierte Signal am Ausgang des Schaltkreises (102) zur dynamischen Normalisierung eine mathematische Transformation zur Modellierung eines Systems, insbesondere von einem dreiphasigen System in ein zweiphasiges System, anzuwenden, wobei die mathematische Transformation zur Modellierung des Systems insbesondere durch einen Block angewandt wird, der am Ausgang des Schaltkreises (102) zur dynamischen Normalisierung und am Eingang des Schaltkreises (130), der den Steuerkreis zur Schätzung der Position des Rotors herstellt, angeordnet ist.

8. Anordnung umfassend:
- eine drehende elektrische Maschine zum Antrieb eines Hybrid- oder Elektrofahrzeugs, und
- eine Vorrichtung zur Steuerung dieser elektrischen Maschine, die eine Bestimmungsvorrichtung (100) nach einem der vorhergehenden Ansprüche umfasst.

9. Verfahren zur Bestimmung der Winkelposition eines Rotors (4) einer drehenden elektrischen Maschine auf Basis von Signalen, die von mehreren Positionssensoren bereitgestellt werden, wobei eine Bestimmungsvorrichtung nach einem der vorhergehenden Ansprüche verwendet wird.

## Claims

1. Device (100) for determining the angular position of a rotor (4) of a rotary electric machine on the basis of signals delivered by a plurality of position sensors, the device comprising:
- a circuit (130) producing a control loop for estimating the position of the rotor, delivering at output a signal representative of the position of the rotor,
**characterized by** the fact that it comprises a circuit (102) for dynamic normalization by the amplitude of the first harmonic of each signal originating from a position sensor, this dynamic normalization circuit (102) being arranged upstream of the circuit (130) producing a control loop for estimating the position of the rotor,
this dynamic normalization circuit (102) receiving at input:
- each signal originating from a position sensor, and
- at least one image of the signal representative of the position of the rotor, this image being in particular a linear combination of the cosine and the sine of an angle measured with respect to the reference position of the rotor,
this dynamic normalization circuit (102) being configured to:
- demodulate each signal originating from a position sensor by the image of the signal representative of the position of the rotor,
- determine, at the end of this demodulation, the amplitude of the first harmonic of this signal originating from a position sensor, and
- normalize each signal originating from a position sensor by dividing it by the amplitude of the first harmonic of said previously determined signal.

2. Device according to Claim 1, wherein demodulation of a signal originating from a position sensor is performed synchronously.

3. Device according to one of the preceding claims, wherein the dynamic normalization circuit (102) performs normalization by dividing the signal originating from the position sensor by the amplitude of the first harmonic determined using demodulation only for a certain operating range of the electric machine.

4. Device according to the preceding claim, wherein the dynamic normalization circuit (102) performs dynamic normalization outside this operating range of the machine by dividing the signal originating from the position sensor by a predefined first harmonic amplitude value.

5. Device according to any one of the preceding claims, wherein the dynamic normalization circuit (102) comprises a low-pass filter (107) making it possible to isolate, from the result of the demodulation performed, the amplitude of the first harmonic of the signal originating from a position sensor.

6. Device according to Claim 5, wherein the low-pass filter (107) is configured to have a variable cutoff frequency depending on the speed of the rotor.

7. Device according to any one of the preceding claims, which is configured to apply, to each normalized signal at the output of the dynamic normalization circuit (102), a mathematical transformation for modelling a system, in particular a three-phase system, as a two-phase system, the mathematical transformation for modelling the system being in particular applied by a block arranged at the output of the dynamic normalization circuit (102) and at the input of the circuit (130) producing the control loop for estimating the position of the rotor.

8. Assembly comprising:
- a rotary electric machine for propelling a hybrid or electric vehicle, and
- a device for controlling this electric machine, comprising a determining device (100) according to any one of the preceding claims.

9. Method for determining the angular position of a rotor (4) of a rotary electric machine on the basis of signals delivered by a plurality of position sensors, wherein a determining device according to any one of the preceding claims is used.
